# EUROPEAN PATENT SPECIFICATION

(11) **EP 3 763 975 B1**
(45) Date of publication and mention of the grant of the patent: **27.11.2024**
(21) Application number: 20184402.4
(22) Date of filing: 07.07.2020
(51) Int. Cl.: F16K 1/52

(54) **VALVE ARRANGEMENT**
VENTILANORDNUNG
AGENCEMENT DE SOUPAPE

(30) Priority: 12.07.2019 SE 1950893
(43) Date of publication of application: 13.01.2021
(73) Proprietor: Purmo Group Sweden AB, 285 21 Markaryd (SE)
(72) Inventor: Arvidsson, Thomas, 34135 Ljungby (SE); Karlsson, Jerry, 31261 Mellbystrand (SE)
(74) Representative: Bergenstråhle & Partners AB

(56) References cited:
- DE-A1- 4 107 969
- DE-A1- 4 325 738
- DE-U- 1 771 815
- US-B2- 10 139 839

## Description

### Field of the invention

The present disclosure relates to a valve arrangement comprising a valve member, configured to move axially towards and away from a valve seat to control a fluid flow, the valve arrangement further including a pre-setting arrangement comprising an outer pre-setting sleeve comprising an aperture, an inner pre-setting sleeve, fitted inside the outer presetting sleeve, co-axially therewith, and being adapted to be rotatable therein, wherein the inner pre-setting sleeve comprises a number of openings, wherein a turning of the inner pre-setting sleeve in relation to the outer presetting sleeve exposes different sets among said openings at said aperture, thereby devising different maximum valve arrangement flows for a given valve pressure difference.

### Technical background

Such valve arrangements provide a valve that can automatically control room temperature by means of a thermostat or manually using a knob, when the valve arrangement is connected to a radiator in a heating system. In addition to this, the pre-setting arrangement allows a maximum flow to be set, typically when the valve arrangement is installed, in order to set flow limits e.g. depending on room size, etc. One problem associated with valve arrangements of this type is how to improve their precision and/or to reduce costs. Documents DE 1771815 U and DE 4325738 A disclose a valve arrangement with an inner and outer sleeve respectively comprising openings and an aperture.

### Summary of the invention

One object of the present disclosure is therefor to provide a valve arrangement with improved precision or to provide a valve arrangement at a lower cost.

This object is achieved by means of a valve arrangement as defined in claim 1 or claim 6.

More specifically, in a valve arrangement of the initially mentioned kind, the outer circumference of the inner pre-setting sleeve may have a greater dimension, at the portion comprising the notches, than a corresponding inner diameter of the outer pre-setting sleeve, such that a press fit is obtained between the outer and inner presetting sleeves at said notches.

This has been shown to reduce leaks where fluid escapes through notches not being aligned with the aperture and passes in between the inner and outer pre-setting sleeve to the aperture. The result of reducing those leaks is an improved precision of the pre-setting function. Alternatively, for a given allowed leak, manufacturing tolerances of the inner and/or the outer sleeve can be relaxed, which provides for lower manufacturing costs. Those effects can be combined.

An end of the inner pre-setting sleeve has a conical portion, the wider end of the conical portion being elastically deformed when inserted in the outer pre-setting sleeve. This provides a press fit at the wider end and seals the area around the openings to some extent.

Ribs may be provided at the outer face of the inner pre-setting sleeve between said openings. Due to the addition of the ribs, press fit is achieved between the ribs reducing leaks from one opening to another.

The openings may be notches provided in an edge of the inner pre-setting sleeve.

Further, a cut-out may be provided at an edge of the inner pre-setting sleeve, the cut-out reaching a distance at least half the oversized portion from said edge of the inner pre-setting sleeve. This allows the inner pre-setting sleeve to be deformed in a predictable manner. Further, the cut-out may provide for a maximum setting opening in the pre-setting arrangement.

The inner pre-setting sleeve may be configured to be urged, in the direction of the turning axis, against the valve seat. This seals the pre-setting arrangement also at the end of the inner pre-setting sleeve.

This effect may also be used per se in a valve arrangement of the initially mentioned kind where the inner pre-setting sleeve is configured to be urged, in the direction of the turning axis, against the valve seat or a surface connected thereto to provide a sealing effect.

The inner pre-setting sleeve may be urged against the valve seat by means of an elastic element, for instance, an O-ring, resting against an inner ledge in the interior of the outer pre-setting sleeve.

The contact interface between the inner pre-setting sleeve and the valve seat or other surface connected thereto may be lengthened by a surface structure to increase the sealing effect.

### Brief description of the drawings

Fig 1 shows a perspective view of a valve arrangement according to the present disclosure.
Fig 2 shows a cross section through a valve arrangement according to the present disclosure.
Fig 3 shows a perspective view of an inner pre-setting sleeve.
Fig 4 shows a front view of an inner pre-setting sleeve according to a first example of the present disclosure.
Fig 5 shows a front view of an inner pre-setting sleeve according to a second example of the present disclosure.
Fig 6A shows an enlarged view of the area A in fig 2.
Fig 6B shows an enlarged view of the area B in fig 2.
Figs 7A-7D show different adaptions of features in fig 6A.

### Detailed description

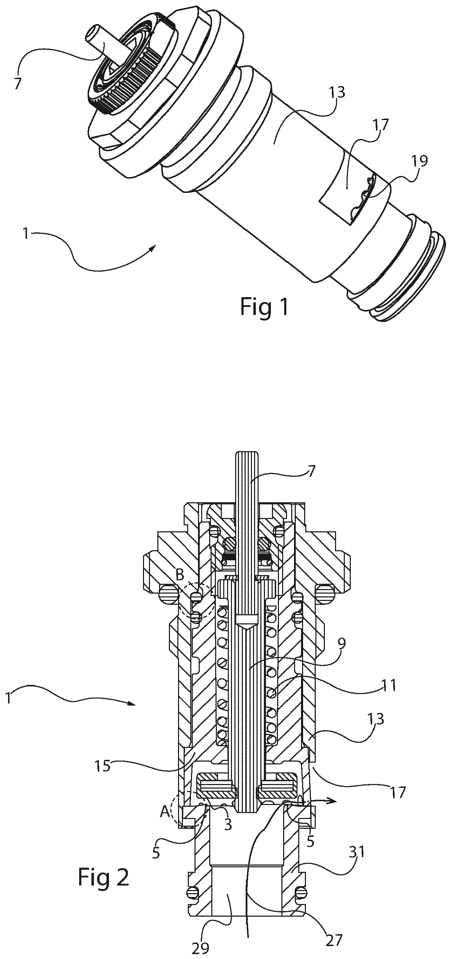

The present disclosure relates to valve arrangements, typically for heating systems. An example of a valve arrangement 1 according to the present disclosure is shown in fig 1. This valve arrangement 1 is of an insert type, which is usually integrated with a radiator to control a fluid flow, typically water, therein. However, the present disclosure is also compatible with stand-alone thermostat arrangements, having an inlet and an outlet tube.

The shown valve arrangement 1 includes a control pin 7, which is usually controlled by a thermostat mounted on the valve arrangement, or alternatively by a control knob or the like, that is manually controlled by a user.

A cross section through the valve arrangement of fig 1 is shown in fig 2. As illustrated, the control pin 7 is connected to a valve member 3 via a spindle 9. If the control pin 7 is pushed inwards, typically by a thermostat (not shown) sensing that the room is becoming too hot, the valve member 3 is moved towards a valve seat 5, thereby reducing the flow of hot water through a radiator (not shown). When the thermostat recedes, the valve member is moved in the opposite direction by the force of a return spring 11, as is well known per se, thereby increasing fluid flow.

The present valve arrangement 1 also includes a pre-setting arrangement, comprising an outer pre-setting sleeve 13 and an inner pre-setting sleeve 15. The inner 15 and outer 13 sleeves are generally of cylindric shapes, the inner sleeve 15 being located inside the outer sleeve 13, concentric therewith along a center axis. The purpose of the pre-setting arrangement 13, 15 is to allow a set maximum flow. This is typically done when installing a radiator with a valve arrangement and is done by a technician.

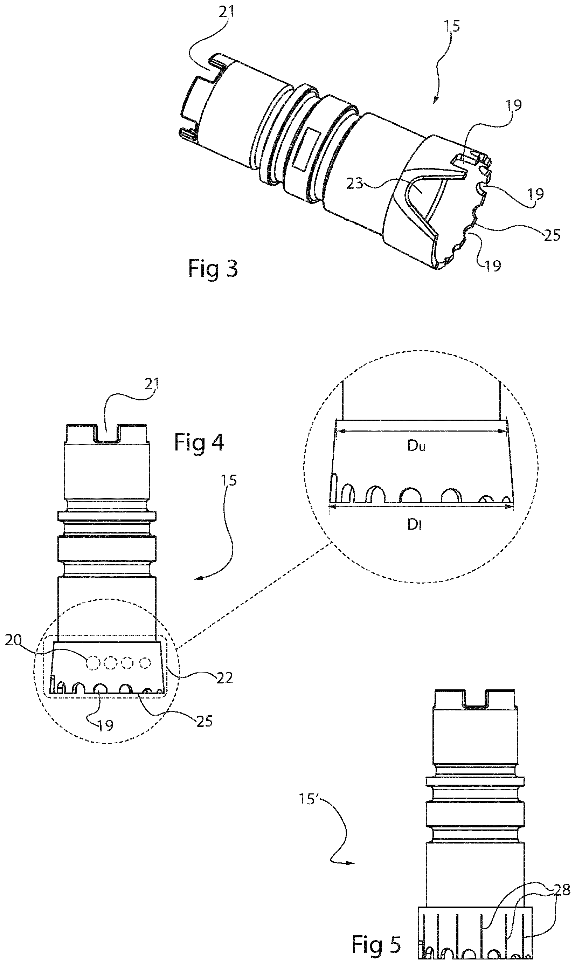

The outer pre-setting sleeve 13 comprises an aperture 17, as is best seen in fig 1. As mentioned, the inner pre-setting sleeve 15 is fitted inside the outer presetting sleeve 13, co-axially therewith. It is further adapted to be rotatable therein, and comprises a number of openings, typically in the form of notches 19 at an edge portion 25 thereof, as is best seen in fig 3 showing a perspective view of an inner pre-setting sleeve 15. Typically, the inner pre-setting sleeve 15 may be made in a plastic material such as Polyoxymethylene (POM) or a similar plastic material. The outer pre-setting sleeve may for instance be made in brass or a similar alloy.

The inner pre-setting sleeve 15 can be rotated in relation to the outer pre-setting sleeve 13, typically by using a tool (not shown) which is connected to a tool interface 21 at an end of the inner pre-setting sleeve 15, which interface is accessible from the exterior of the valve arrangement 1.

Turning the inner pre-setting sleeve 15 inside the outer pre-setting sleeve 13 exposes different openings or notches 19 of the inner pre-setting sleeve 15 in register with the aperture 17 of the outer pre-setting sleeve 13, in order to provide different maximum valve arrangement flows for a given pressure difference over the valve.

The size of the exposed openings or notches 19 in the inner pre-setting sleeve 15 as well as the number of such notches 19 determines the maximum valve arrangement flow. As illustrated in fig 3, one edge 25 of the inner pre-setting sleeve 15 may comprise a number of notches 19 along its circumference, increasing in size there along. In the example shown in fig 1 for instance, three notches 19 are visible in the outer pre-setting sleeve aperture 17.

An example of a fluid flow 27 path is illustrated in the cross section of fig 2. The fluid enters a channel 29, being part of a valve seat unit 31, and passes between the valve member 3 and the valve seat 5, as the valve member 3 is in an open position in relation to the valve seat 5. Thereafter, the fluid flow 27 passes through one or more notches 19 of the inner pre-setting sleeve 15 being in register with the aperture 17 of the outer pre-setting sleeve 13. In the illustrated case, as the valve member 3 is in its most open position, the pre-setting arrangement 13, 15 is what limits the fluid flow.

The present disclosure is concerned with reducing leaks in such a pre-setting arrangement for a given level of manufacturing tolerances. A reduced leaking can be achieved by providing the inner pre-setting sleeve 15 in the outer pre-setting sleeve 13 in a manner providing a press fit, i.e. making the outer dimensions of the inner pre-setting sleeve 15 slightly greater than the inner dimensions of the outer presetting sleeve 13. Thereby, the thin passage between the inner and outer pre-setting sleeves 15, 13 may be minimized, such that water leaks therethrough to a much lesser extent. This will be described with two different examples in fig 4 and 5.

Reduced leaking may also be achieved in accordance with the present disclosure by urging an edge 25 of the inner pre-setting sleeve 15 towards the valve seat or a surface connected therewith. This will be disclosed with reference to figs 2, 6, and 7A-7D.

Each of those measures to reduce leaking can be used independently of the other although they may well be combined as disclosed in fig 2 to provide a compound effect. Generally, the achieved effect is improved pre-setting precision, and/or lower tolerance requirements in production of the pre-setting arrangement.

Fig 4 shows a front view of an inner pre-setting sleeve 15 according to a first example of the present disclosure. In this example, the inner end of the inner presetting sleeve 15, i.e. the end opposite to the tool interface 21 is made slightly conical, such that it tapers in the direction away from the edge 25 where the notches 19 are located. At this edge 25 the inner pre-setting sleeve 15 has a diameter greater than the inner diameter of the outer pre-setting sleeve 13. When inserted in the outer pre-setting sleeve 13, this portion 22 of the inner pre-setting sleeve 15 becomes compressed, thereby closing any gap therebetween such that leakage through notches 19 not in register with the outer pre-setting sleeve aperture 17 can be reduced. As shown in fig 3, this portion of the inner pre-setting sleeve 15 may be provided with a cut-out 23 that allows the oversized portion to become elastically deformed in a predictable manner when inserted in the outer pre-setting sleeve 13. This cut-out 23, which is optional, may be narrower, shaped like a thin slit, although the cut-out 23 illustrated in fig 3 also serves the purpose as a wide notch not limiting the flow if in register with the outer pre-setting sleeve's 13 aperture 17.

The enlarged portion of fig 4 shows example of diameters used in the conical part of the inner pre-setting sleeve 15, where the upper diameter Du is 16,6 mm and the lower diameter DI is 17,3 mm, this tapering appearing at a height of 8,0 mm. Note that the conicity of fig 4 is somewhat exaggerated for illustrational purposes. A press fit at the lower 4 mm of the inner pre-setting sleeve can be obtained in this way. Also illustrated schematically in fig 4 is openings 20, which could be arranged higher up on the inner pre-setting sleeve 15 as an alternative or a complement to the notches 19.

Fig 5 shows a front view of an inner pre-setting sleeve according to a second example of the present disclosure. In this case, the generally cylindrical outer dimensions of the inner pre-setting sleeve 15' may correspond to the inner dimensions of the outer pre-setting sleeve 13. In addition to this however, ribs 28 are provided at the outer face of the inner pre-setting sleeve 15' between said openings. Those ribs 28 contribute to the inner pre-setting sleeve 15' outer circumference having a greater radial dimension, with respect to the turning axis of the inner pre-setting sleeve 15', at the portion comprising the notches 19 or openings. As the ribs are located in between the notches, leaking between the notches is minimized or reduced. In this case, as illustrated in fig 5, the portion 22 comprising the notches 19 or openings is not conical as illustrated, although the embodiments of figs 4 and 5 could be combined.

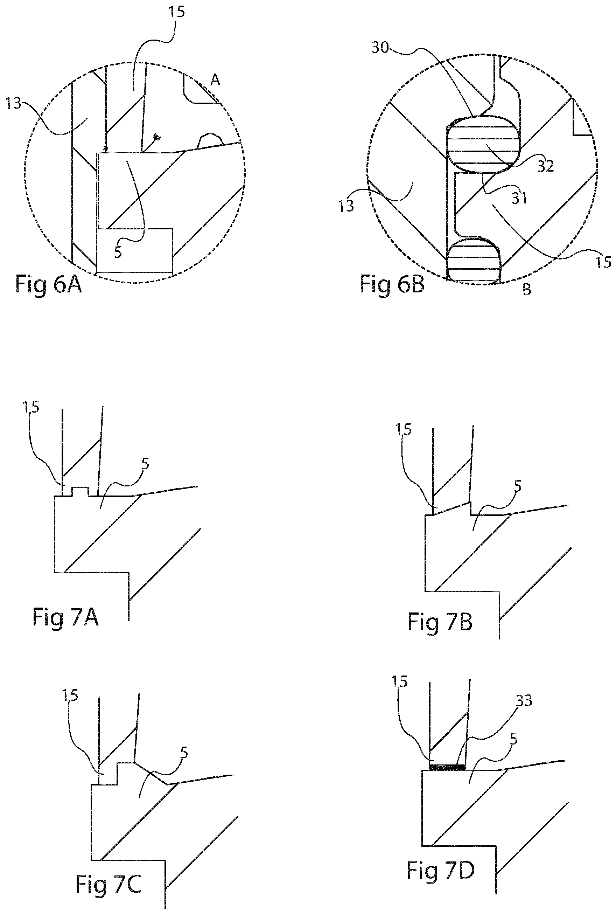

The present disclosure also relates to reducing leaks in the pre-setting arrangement 13, 15 by sealing off the edge 25 at the end of the inner pre-setting sleeve 15 illustrated in fig 3. This reduced leaking between this edge and the valve seat 5 and into the space between the inner and outer pre-setting sleeves as indicated in the enlarged portion A of fig 2 shown in fig 6A.

This is done by arranging that the inner pre-setting sleeve 15 is urged, in the direction of its turning axis, against the valve seat 5 or a surface connected to the valve seat. This can be done by means of an elastic element which is compressed and urges the inner pre-setting sleeve in the desired direction. Alternatively, the inner-pre-setting sleeve 15 itself or the valve seat may be elastic and compressed carry out the corresponding function.

As shown in the enlarged portion B of fig 2 shown in fig 6B, the elastic element may be devised as an O-ring 32, which rests against an inner ledge 30 in the interior of the outer pre-setting sleeve 13 and is compressed by an opposing ledge 31 of the inner pre-setting sleeve 15. Other means for urging the inner pre-setting sleeve 15 in this direction may be considered, such as a spring or the like.

This sealing effect may be enhanced by lengthening the contact interface between the inner pre-setting sleeve 15 and the valve seat 5 or other surface, by a surface structure. This may be devised as a groove and tongue structure as schematically illustrated in the cross section of fig 7A, but also an inclined surface as shown in fig 7B or a step as shown in fig 7C would lengthen the contact surface between the edge of the inner pre-setting sleeve 15 and the seat 5 or other surface. As another option shown in fig 7D, the edge of the inner pre-setting sleeve 15 may be provided with a softer elastic material functioning as a sealing lip 33.

The sealing function provided by urging the inner pre-setting sleeve 15 and by having the inner pre-setting sleeve 15 oversized in relation to the outer pre-setting sleeve 13 may be combined.

The present disclosure is not restricted to the examples above and may be varied and altered in different ways within the scope of the appended claims.

## Claims

1. A valve arrangement (1) comprising a valve member (3), configured to move axially towards and away from a valve seat (5) to control a fluid flow between an input and an output, the valve arrangement (1) further including a pre-setting arrangement comprising:
- an outer pre-setting sleeve (13) comprising an aperture (17);
- an inner pre-setting sleeve (15), fitted inside the outer presetting sleeve (13), co-axially therewith, and being adapted to be rotatable about an axis therein, the inner pre-setting sleeve (15) comprising a number of openings (19);
- wherein a turning of the inner pre-setting sleeve (13) in relation to the outer pre-setting sleeve (15) exposes different sets among said openings (19) at said aperture, thereby devising different maximum valve arrangement flows for a given valve pressure difference, wherein the outer circumference of the inner pre-setting sleeve (15) having a greater radial dimension, with respect to said axis, at the portion comprising said openings (19), than a corresponding inner diameter of the outer pre-setting sleeve (13) such that a press fit is obtained between the outer and inner pre-setting sleeves at said openings (19), wherein an end of the inner pre-setting sleeve (15) has a conical portion (22), the wider end of the conical portion being elastically deformed when inserted in the outer pre-setting sleeve (13).

2. Valve arrangement according to claim 1, wherein ribs (28) are provided at the outer face of the inner pre-setting sleeve (15) between said openings.

3. Valve arrangement according to any of the preceding claims, wherein said openings (19) are notches provided in an edge (25) of said inner presetting sleeve (15).

4. Valve arrangement according to any of the preceding claims, wherein a cut-out (23) is provided at an edge (25) of the inner pre-setting sleeve (15), the cut-out (23) reaching at least half the distance from said edge (25) where the inner pre-setting sleeve (15) is oversized.

5. Valve arrangement according to any of the preceding claims, wherein the inner pre-setting sleeve (13) is configured to be urged, in the direction of said axis, against the valve seat (5).

6. A valve arrangement (1) comprising a valve member (3), configured to move axially towards and away from a valve seat (5) to control a fluid flow between an input and an output, the valve arrangement (1) further including a pre-setting arrangement comprising:
- an outer pre-setting sleeve (13) comprising an aperture (17);
- an inner pre-setting sleeve (15), fitted inside the outer presetting sleeve (13), co-axially therewith, and being adapted to be rotatable about an axis therein, the inner pre-setting sleeve (15) comprising a number of notches (19) at an edge portion;
- wherein a turning of the inner pre-setting sleeve (15) in relation to the outer pre-setting sleeve (13) exposes different sets among said notches (19) at said aperture, thereby devising different maximum valve arrangement flows for a given valve pressure difference, and the inner pre-setting sleeve (15) is configured to be urged, in the direction of said axis, against the valve seat (5) or a surface connected thereto.

7. Valve arrangement according to claim 6, wherein the inner pre-setting sleeve (15) is urged against the valve seat by means of an elastic element.

8. Valve arrangement according to claim 7, wherein the elastic element is an O-ring (32), resting against an inner ledge (30) in the interior of the outer pre-setting sleeve (13).

9. Valve arrangement according to any of claims 6-8, wherein the contact interface between the inner pre-setting sleeve (15) and the valve seat (5) or other surface connected thereto is lengthened by a surface structure.

10. Valve arrangement according to any of claims 6-9, wherein the outer circumference of the inner pre-setting sleeve (15) has a greater radial dimension, with respect to said axis, at the portion comprising said openings (19), than a corresponding inner diameter of the outer pre-setting sleeve (13) such that a press fit is obtained between the outer and inner pre-setting sleeves at said openings (19).

## Patentansprüche

1. Ventilanordnung (1), umfassend ein Ventilelement (3), das dazu ausgelegt ist, sich axial auf einen Ventilsitz (5) zu und davon weg zu bewegen, um eine Fluidströmung zwischen einem Eingang und einem Ausgang zu steuern, wobei die Ventilanordnung (1) ferner eine Voreinstellungsanordnung umfasst, die Folgendes umfasst:
- eine äußere Voreinstellungshülse (13), umfassend eine Öffnung (17);
- eine innere Voreinstellungshülse (15), die an der äußeren Voreinstellungshülse (13) koaxial dazu montiert ist und dazu eingerichtet ist, um eine Achse darin drehbar zu sein, wobei die innere Voreinstellungshülse (15) mehrere Öffnungen (19) umfasst;
- wobei das Drehen der inneren Voreinstellungshülse (13) in Bezug zur äußeren Voreinstellungshülse (15) verschiedene Sätze der Öffnungen (19) an der Apertur freilegt, wodurch verschiedene maximale Ventilanordnungsströme für einen gegebenen Ventildruckunterschied festgelegt werden, wobei der Außenumfang der inneren Voreinstellungshülse (15) eine größere Radialabmessung in Bezug zur Achse an dem die Öffnungen (19) umfassenden Abschnitt aufweist als der zugehörige Innendurchmesser der äußeren Voreinstellungshülse (13), sodass eine Presspassung zwischen der äußeren und inneren Voreinstellungshülse an den Öffnungen (19) erhalten wird, wobei ein Ende der inneren Voreinstellungshülse (15) einen konischen Abschnitt (22) aufweist, wobei das breitere Ende des konischen Abschnitts elastisch verformt wird, wenn es in die äußere Voreinstellungshülse (13) eingesetzt wird.

2. Ventilanordnung nach Anspruch 1, wobei Rippen (28) an der Außenseite der inneren Voreinstellungshülse (15) zwischen den Öffnungen vorgesehen sind.

3. Ventilanordnung nach einem der vorstehenden Ansprüche, wobei die Öffnungen (19) Kerben sind, die in einer Kante (25) der inneren Voreinstellungshülse (15) vorgesehen sind.

4. Ventilanordnung nach einem der vorstehenden Ansprüche, wobei ein Ausschnitt (23) an einer Kante (25) der inneren Voreinstellungshülse (15) vorgesehen ist, wobei der Ausschnitt (23) zumindest die Hälfte der Entfernung von der Kante (25) erreicht, an der die innere Voreinstellungshülse (15) überdimensioniert ist.

5. Ventilanordnung nach einem der vorstehenden Ansprüche, wobei die innere Voreinstellungshülse (13) dazu ausgelegt ist, in Richtung der Achse gegen den Ventilsitz (5) gedrückt zu werden.

6. Ventilanordnung (1), umfassend ein Ventilelement (3), das dazu ausgelegt ist, sich axial auf einen Ventilsitz (5) zu und davon weg zu bewegen, um eine Fluidströmung zwischen einem Eingang und einem Ausgang zu steuern, wobei die Ventilanordnung (1) ferner eine Voreinstellungsanordnung umfasst, die Folgendes umfasst:
- eine äußere Voreinstellungshülse (13), umfassend eine Öffnung (17);
- eine innere Voreinstellungshülse (15), die an der äußeren Voreinstellungshülse (13) koaxial dazu montiert ist und dazu eingerichtet ist, um eine Achse darin drehbar zu sein, wobei die innere Voreinstellungshülse (15) mehrere Kerben (19) an einem Kantenabschnitt umfasst;
- wobei das Drehen der inneren Voreinstellungshülse (13) in Bezug zur äußeren Voreinstellungshülse (15) verschiedene Sätze der Kerben (19) an der Apertur freilegt, wodurch verschiedene maximale Ventilanordnungsströme für einen gegebenen Ventildruckunterschied festgelegt werden, und wobei die innere Voreinstellungshülse (15) dazu ausgelegt ist, in Richtung der Achse gegen den Ventilsitz (5) oder eine damit verbundene Fläche gedrückt zu werden.

7. Ventilanordnung nach Anspruch 6, wobei die innere Voreinstellungshülse (15) mittels eines elastischen Elements gegen den Ventilsitz gedrückt wird.

8. Ventilanordnung nach Anspruch 7, wobei das elastische Element ein O-Ring (32) ist, der an einer Innenkante (30) im inneren der äußeren Voreinstellungshülse (13) aufliegt.

9. Ventilanordnung nach einem der Ansprüche 6-8, wobei die Kontaktfläche zwischen der inneren Voreinstellungshülse (15) und dem Ventilsitz (5) oder einer anderen damit verbundenen Fläche durch eine Oberflächenstruktur verlängert ist.

10. Ventilanordnung nach einem der Ansprüche 6-9, wobei der Außenumfang der inneren Voreinstellungshülse (15) eine größere Radialabmessung in Bezug zur Achse an dem die Öffnungen (19) umfassenden Abschnitt aufweist als der zugehörige Innendurchmesser der äußeren Voreinstellungshülse (13), sodass eine Presspassung zwischen der äußeren und inneren Voreinstellungshülse an den Öffnungen (19) erhalten wird.

## Revendications

1. Agencement de soupape (1) comprenant un organe de soupape (3), configuré pour se rapprocher et s'éloigner d'un siège de soupape (5) pour commander un écoulement de fluide entre une entrée et une sortie, l'agencement de soupape (1) incluant en outre un agencement de préréglage comprenant :
- un manchon de préréglage extérieur (13) comprenant une échancrure (17) ;
- un manchon de préréglage intérieur (15), ajusté à l'intérieur du manchon de préréglage extérieur (13), coaxialement avec celui-ci, et adapté pour être rotatif autour d'un axe dans celui-ci, le manchon de préréglage intérieur (15) comprenant un nombre d'ouvertures (19) ;
- dans lequel un tour du manchon de préréglage intérieur (13) relativement au manchon de préréglage extérieur (15) expose différents ensembles parmi lesdites ouvertures (19) au niveau de ladite échancrure, ainsi créant des écoulements d'agencement de soupape maximums différents pour une différence de pression de soupape donnée, dans lequel la circonférence extérieure du manchon de préréglage intérieur (15) ayant une dimension radiale plus grande, par rapport audit axe, au niveau de la partie comprenant lesdites ouvertures (19), qu'un diamètre intérieur correspondant du manchon de préréglage extérieur (13) de manière telle qu'un ajustement à force est obtenu entre les manchons de préréglage extérieur et intérieur au niveau desdites ouvertures (19), dans lequel une extrémité du manchon de préréglage intérieur (15) a une partie conique (22), l'extrémité plus large de la partie conique étant élastiquement déformée lorsqu'elle est insérée dans le manchon de préréglage extérieur (13).

2. Agencement de soupape selon la revendication 1, dans lequel des nervures (28) sont prévues sur la face extérieure du manchon de préréglage intérieur (15) entre lesdites ouvertures.

3. Agencement de soupape selon de quelconques des revendications précédentes, dans lequel lesdites ouvertures (19) sont des encoches prévues dans un bord (25) dudit manchon de préréglage intérieur (15).

4. Agencement de soupape selon de quelconques des revendications précédentes, dans lequel une découpe (23) est prévue au niveau d'un bord (25) du manchon de préréglage intérieur (15), la découpe (23) couvrant au moins la moitié de la distance depuis ledit bord (25) où le manchon de préréglage intérieur (15) est surdimensionné.

5. Agencement de soupape selon de quelconques des revendications précédentes, dans lequel le manchon de préréglage intérieur (13) est configuré pour être poussé, dans la direction dudit axe, contre le siège de soupape (5).

6. Agencement de soupape (1) comprenant un organe de soupape (3), configuré pour se rapprocher et s'éloigner d'un siège de soupape (5) pour commander un écoulement de fluide entre une entrée et une sortie, l'agencement de soupape (1) incluant en outre un agencement de préréglage comprenant :
- un manchon de préréglage extérieur (13) comprenant une échancrure (17) ;
- un manchon de préréglage intérieur (15), ajusté à l'intérieur du manchon de préréglage extérieur (13), coaxialement avec celui-ci, et étant adapté pour être rotatif autour d'un axe dans celui-ci, le manchon de préréglage intérieur (15) comprenant un nombre d'encoches (19) au niveau d'une partie de bord ;
- dans lequel un tour du manchon de préréglage intérieur (15) relativement au manchon de préréglage extérieur (13) expose différents ensembles parmi lesdites encoches (19) au niveau de ladite échancrure, ainsi créant des écoulements d'agencement de soupape maximums différents pour une différence de pression de soupape donnée, et le manchon de préréglage intérieur (15) est configuré pour être poussé, dans la direction dudit axe, contre le siège de soupape (5) ou une surface reliée à celui-ci.

7. Agencement de soupape selon la revendication 6, dans lequel le manchon de préréglage intérieur (15) est poussé contre le siège de soupape au moyen d'un élément élastique.

8. Agencement de soupape selon la revendication 7, dans lequel l'élément élastique est un joint torique (32), reposant contre un rebord intérieur (30) dans l'intérieur du manchon de préréglage extérieur (13).

9. Agencement de soupape selon de quelconques des revendications 6 à 8, dans lequel l'interface de contact entre le manchon de préréglage intérieur (15) et le siège de soupape (5) ou une autre surface relié à celui-ci est rallongée par une structure de surface.

10. Agencement de soupape selon de quelconques des revendications 6 à 9, dans lequel la circonférence extérieure du manchon de préréglage intérieur (15) a une dimension radiale plus grande, par rapport audit axe, au niveau de la partie comprenant lesdites ouvertures (19), qu'un diamètre intérieur correspondant du manchon de préréglage extérieur (13) de manière telle qu'un ajustement à force est obtenu entre les manchons de préréglage extérieur et intérieur au niveau desdites ouvertures (19).
